# EUROPÄISCHE PATENTSCHRIFT

(11) **EP 0 640 651 B1**
(45) Veröffentlichungstag und Bekanntmachung des Hinweises auf die Patenterteilung: **29.01.1997**
(21) Anmeldenummer: 94112820.9
(22) Anmeldetag: 17.08.1994
(51) Int. Cl.: C08L 33/12, C08K 3/34, C08K 7/00

(54) **Hochgefüllte Kunststoff-Formkörper mit Graniteffekt**
Granite-like shaped body made of highly filled plastic material
Articles en forme d'aspect granitique en plastique hautement chargé

(30) Priorität: 25.08.1993 DE 4328545
(43) Veröffentlichungstag der Anmeldung: 01.03.1995
(73) Patentinhaber: Röhm GmbH, 64293 Darmstadt (DE)
(72) Erfinder: Ittmann, Günther, D-64823 Gross-Umstadt (DE); Krieg, Manfred, Dr., D-64289 Darmstadt (DE)

(56) Entgegenhaltungen:
- EP-A- 0 218 866
- WO-A-91/11404
- PATENT ABSTRACTS OF JAPAN, unexamined applications, C Field, Band 14, Nr. 435; 18. September 1990 THE PATENT OFFICE JAPANESE GOVERNMENT Seite 147 C 760; & JP-A-02 170 847 (KYOWA GAS CHEM. IND. CO LTD)

## Beschreibung

### Gebiet der Erfindung

Die Erfindung betrifft hochgefüllte Kunststoff-Formkörper mit Graniteffekt auf Polymethylmethacrylatbasis unter Verwendung von Dekorpigmenten.

### Stand der Technik

Hochgefüllte Kunststoffharze, die im Aussehen Gesteinstypen imitieren, sind seit längerem bekannt (vgl. Ullmann's Encyclopedia of Industrial Chemistry, 5th Ed. Vol. A 20, 494-500, VCH 1992).
Dabei galt Marmor- und Granitimitaten als besonders markanten Gesteinstypen das besondere Interesse der Technik.
So ist aus der DE-C 26 27 081 (US-A 4 159 301) eine Granitimitation bekannt, die auf dem Vorliegen zweier diskreter Typen von Filler-Partikeln in regelloser Verteilung in einer PMMA-Matrix beruht, nämlich (1) farbiger oder ungefärbter undurchsichtiger Teilchen und (2) farbiger oder ungefärbter durchsichtiger oder transparenter Teilchen, wobei beide Teilchenarten in der kleinsten Abmessung eine Mindestteilchengröße von > 200 µm aufweisen. Weiter ist die Einhaltung einer Brechungszahl n_{D} des PMMA-Materials und des Filler-Materials zwischen 1,4 und 1,6 vorgeschrieben. In der WO 91/11 404 wird ein imitierter farbiger Granit beschrieben, aufgebaut aus einer aus PMMA und Aluminiumoxidtrihydratpartikeln unter 100 um Länge enthaltenden Matrix, ferner PMMA-Partikeln im Bereich 100 bis 5 000 µm, gefüllt mit 50 - 70 Gew.-% Aluminiumoxid-trihydrat und bis 2,5 Gew.-% eines farblosen bis weißen Pigments sowie PMMA Partikel derselben Abmessung, die mit 0,1 - 2,5 Gew.-% Schwarzpigment gefüllt sind und desweiteren PMMA-Partikel derselben Abmessungen die mit anderen Farbpigmenten gefüllt sind.
Dem Absetzen der größeren Partikel wird durch die Anwendung rheologisch wirksamer Additive begegnet.
Eine hinsichtlich Teilchengröße und Pigment von der vorgenannten abweichende Lehre wird in der WO 90 01 470 desselben Anmelders geboten.
Aus der DE-A 38 21 116 sind eingefärbte Polyacrylatplatten mit Steindekor bekannt. Dabei wird die verwendete Vorstufe des Matrixpolymerisats homogen eingefärbt und anschließend ein gemahlenes, ebenfalls eingefärbtes Acrylharz eingetragen, das sich farblich von dem Matrixpolymerisat unterscheidet und dieses im Matrixpolymerisat verteilt.
Nach Abschluß der Polymerisation werden dann die Formkörper, in deren Bodenbereich sich das ursprünglich gemahlene Acrylharz abgesetzt hat, entformt.

### Aufgabe und Lösung

Die gezielt auf die Herstellung von Kunststoff-Formkörpern mit Granit-Effekt gerichteten Schutzrechte beschreiben relativ komplexe Systeme und Vorgehensweisen. Es bestand daher die Aufgabe fußend auf der bekannten Technologie gefüllter Gießharze in einfacher Weise zu Kunststoff-Formkörpern mit Granit-Effekt zu gelangen, wobei an der Qualität der Produkte allgemein keine Abstriche hingenommen werden sollten.

Die Erfindung betrifft ein Verfahren zur Herstellung von gefüllten Kunststoff-Formkörpern auf PMMA-Basis mit Granit-Effekt in einer formgebenden Polymerisationskammer, wobei man in einer Gießharz-Suspension, bestehend aus
A) 80 - 20 Gew.-Teilen einer flüssigen PMMA-Polymervorstufe
B) 0 - 75, vorzugsweise 40 - 75 Gew.Teilen eines (nichtmetallisierten) teilchenförmigen Füllstoffs
C) 0 - 5 Gew.-Teile bezogen auf die Summe von A) und B) einer polymerisierbaren Organosiliciumverbindung als Haftvermittler und
D) 0 - 2 Gew.-% eines oder mehrerer Pigmente oder Farbmittel
metallfarbene, plättchenförmige Schichtsilikate SSK in Partikelform im Teilchengrößenbereich zwischen 20 und 500 um in Anteilen von 1 bis 35 Gew.-Teilen bezogen auf die Summe von A) und B) verteilt und die freiradikalische Polymerisation bis zum Ende durchführt; vorzugsweise bilden A) und B) zusammen 100 Gew.-Teile.

Die Durchführung des erfindungsgemäßen Verfahrens kann in unmittelbarer Anlehnung an den Stand der Technik erfolgen. (vgl. Ullmanns Encyclopedie der Techn. Chemie, 4. Aufl., Bd. 19, S. 22 - 23, Verlag Chemie; H. Rauch-Puntigam, Th. Völker, Acryl- und Methacrylverbindungen, S. 274 - 280 Springer Verlag 1967).
Die flüssige PMMA-Polymervorstufe (Praepolymerisat) besteht vorzugsweise aus anpolymerisierten Monomeren, welche beispielsweise ca. 5 Gew.-% Polymerisat enthalten können.

Als Monomer wird Methylmethacrylat in der üblichen Reinheit in Mengen von 80 - 100 Gew-% bezogen auf die Gesamtheit der Monomeren angewendet. Als Comonomere kommen die an sich üblichen wie z.B. Acrylester wie Butylacrylat, Ethylhexyl(meth)acrylat, Methylacrylat (Meth)acrylsäure, gegebenenfalls substituierte Amide der (Meth)acrylsäure, (Meth)acrylnitril, Styrol und alkylierte Derivate desselben, Vinylacetat etc. infrage.
Als flüssige Polymervorstufe sind Monomere bzw. Monomermischungen geeignet wie in EP-PS 218 866 beschrieben. Die Monomeren, die vorzugsweise ein Praepolymerisat enthalten, werden radikalisch unter Bildung des bei Raumtemperatur festen Polymerisats polymerisiert (vgl. DE-PS 24 49 656; EP-PS 214 511, EP-PS 218 866). Dabei sollten die flüssigen Polymervorstufen im allgemeinen eine Viskosität von weniger als 5 Pa·s, vorzugsweise von weniger als 0,5 Pa·s bei der zur Formgebung vorgeschlagenen Temperatur aufweisen.

Ferner können vernetzende Monomere, z.B. ungesättigte Ester mehrwertiger Alkohole wie z.B. Ethylenglykoldi(meth)acrylat, 1,4-Butandioldi(meth)acrylat, Triglykoldi(meth)acrylat oder Allylverbindungen wie z.B. Allylmethacrylat, Triallylcyanurat oder Triallylisocyanurat in Mengen bis zu 10 Gew.-Teilen, im allgemeinen 0,1 - 8 Gew.-Teile bezogen auf die Summe von A) und B) angewendet werden.

Falls eine Steuerung des Molekulargewichts beabsichtigt ist, können die bekannten Regler in den an sich bekannten Konzentrationen, beispielsweise 0,01 - 0,5 Gew.-%, vorzugsweise 0,05 - 0,2 Gew.-% bezogen auf die Monomeren eingesetzt werden. Genannt seien organische Schwefelverbindungen (vgl. H. Rauch-Puntigam, Th. Völker, Acryl- und Methacrylverbindungen, loc.cit.)
Im allgemeinen liegen die Molekulargewichte des (unvernetzten) Matrixpolymerisats im Bereich 2 x 10⁵ bis 5 x 10⁶ Dalton (Bestimmung mittels Gelpermeationschromatographie). Die VICAT-Erweichungstemperatur liegt in der Regel bei > 100 Grad C. Weiter können die Polymerisationsansätze noch die an sich bekannten Hilfsstoffe wie UV-Absorber, Weichmacher, Antioxidantien, Flammschutzmittel etc. enthalten.

Für den Granit-Effekt verantwortlich sind in erster Linie die erfindungsgemäß zugesetzten metallfarbenen, plättchenförmigen Schichtsilikate SSK in Partikelform mit Teilchengrößen zwischen 20 und 500 µm, die der Gießharz-Suspension in Mengen von 1 bis 35 Gew.-Teilen bezogen auf die Summe von A) und B) zugesetzt werden. Insbesondere handelt es sich um solche mit einer gold- oder silberschimmernden Oberfläche. Sie unterscheiden sich bereits dadurch von den bekannten Eigenschaften der Komponente B).

Von besonderem Interesse sind sogenannte Decor-Pigmente der Firma Naintsch (A-8020 Graz - Austria). Deren chemische Zusammensetzung liegt in den Bereichen 34 ± 2 % SiO₂, 32 ± 2 % MgO, 20 ± 1,5 % Al₂O₃, 11 ± 1 % Fe₂O₃, 1,2 ± 0,5 % K₂O, 0,1 % ± 0,05 % CaO. Die Dichte liegt bei 2,3 kg/dm³, der Schmelzpunkt > 1300 Grad C.
Die verschiedenen Typengrößen werden durch Mahlung und nachfolgende Siebung erreicht und liegen zwischen 32 und 500 µm.
Sie werden angeboten mit Gold- bzw. Silberglanz und in den Typenbereichen 250 - 500 µm; 125 - 250 µm; 63 - 125 µm und 32 - 63 µm Teilchendurchmesser. Die Schichtsilikate SSK können als alleinige anorganisch-mineralische Komponente eingesetzt werden. In diesem Falle gelingt es z.B. 33,3 Gew.-Teile des Schichtsilikats SSK der Abmessungen 250 - 500 µm in die Komponente A) einzuarbeiten. Bevorzugt wird die Einarbeitung von Schichtsilikaten mit Silberglanz mit einem Durchmesser von 125 - 250 µm in Mengen von ca. 5 Gew.-Teilen zu Suspensionen mit einem Gehalt an Cristobalit-Fillermaterial von ca. 60 Gew.-%. Eine weitere vorteilhafte Ausführungsform besteht in der Anwendung von Schichtsilikaten mit Goldglanz mit einem Durchmesser von 125 - 250 µm.
Sehr vorteilhaft ist die Anwendung zusammen mit den (nichtmetallisierten) teilchenförmigen Füllstoffen. Als solche eignen sich die einschlägig für Gießharze verwendeten anorganischen Materialien wie beispielsweise Aluminiumoxide bzw. Aluminiumoxidhydrate, Alkali- und/oder Erdalkalioxide, Siliciumdioxid und/oder Titandioxid in den verschiedenen Modifikationen, Tone, Silikate, Oxide, Kohle, Metalle oder Metallegierungen, synthetische Materialien wie Keramik, Glasmehl, Porzellan, Schlacke, oder feinverteiltes Siliciumdioxid, ferner Kaolin, Talkum, Glimmer, Feldspat, Apatit, Baryte, Gips, Kreide, Kalkstein, Dolomit u.a. allein oder im Gemisch. Besonders bevorzugt seien Quarze und Aluminiumhydroxid sowie Aluminiumoxidhydrat.
Zweckmäßig wird bei den anorganischen Füllstoffen eine mittlere Korngröße der Füllstoffteilchen von 100 µm (Durchmesser), vorzugsweise von 75 µm nicht überschritten.

Vorzugsweise ist der anorganische Füllstoff so beschaffen, daß das ausgehärtete Gießharz in der Regel einen elastischen Schermodul von wenigstens 5 GNm⁻², bevorzugt von wenigstens 10 GNm⁻² aufweist, wobei bei der Einstellung der mechanischen Eigenschaften die vorgesehene Anwendung der Gießharze im Auge zu behalten ist.
Die Herstellung der Füllstoffe in den zweckmäßigen Korngrößen kann nach den bekannten Verfahren erfolgen, beispielsweise durch Brechen und Mahlen.

Ferner können in an sich bekannter Weise die Organosiliciumverbindungen der Gruppe C) als Haftvermittler für die Füllermaterialien eingesetzt werden. In erster Linie handelt es sich um funktionelle Organosiliciumverbindungen mit mindestens einer ethylenisch ungesättigten Gruppe im Molekül. Der die ethylenisch ungesättigte Gruppe tragende, funktionelle Rest ist im allgemeinen über ein Kohlenstoffatom mit dem zentralen Siliciumatom verknüpft. Die verbleibenden Liganden am Silicium sind in der Regel Alkoxyreste mit 1 bis 6 Kohlenstoffatomen, wobei sich noch Etherbrücken im Alkylrest befinden können. Genannt seien z.B. Trialkoxysilane wie Vinyltrialkoxysilan oder solche Organosiliciumverbindungen bei denen die CC-Doppelbindung über ein oder mehrere Kohlenstoffatome mit dem Si-Atom verbunden sind wie Allyltrialkoxysilane oder α-Methacryloyloxypropyltrialkoxysilane. Weiter können Dialkoxysilane verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Als Organosililciumkomponenten können beispielsweise dienen: Vinyltrimethoxysilan, Vinyltriethoxysilan, Vinyltriacetoxysilan, Vinyltris(methoxyethoxy)silan, Divinyldimethoxysilan, Vinylmethyldimethoxysilan, Vinyltrichlorsilan, α-Methacryloyloxypropyltrimethoxysilan, α-Methacryloyloxypropyltris(methoxyethoxy)silan oder Gemische der vorstehend genannten Komponenten. Vorteilhafterweise werden die Organosiliciumverbindungen zusammen mit Katalysatoren vom Amintyp, insbesondere vom Typ der Alkylamine mit 2 bis 6 Kohlenstoffatomen, speziell mit n-Butylamin verwendet. Der Aminkatalysator wird im allgemeinen in Mengen von 0,5 bis 10 Gew.-%, vorzugsweise 1 bis 5 Gew.-% bezogen auf die Organosiliciumverbindung eingesetzt. Im allgemeinen beträgt das Gewichtsverhältnis von anorganischem Füllstoff B) zu Organosiliciumverbindungen C) zwischen 500 : 1 bis 20 : 1, vorzugsweise (50 ± 25) : 1.

Weiter werden den Polymerisationsansätzen geeignete, an sich bekannte Pigmente bzw. Farbmittel D) gegebenenfalls als Mischungen in Mengen von 0 bis 2 Gew.-% zugesetzt (vgl. Ullmann's Encycloopedia of Industrial Chemistry, 5th Ed. Vol. A20, loc.cit. )
Genannt seien insbesondere Titandioxid, Eisenoxid, Zinkweiß, Ultramarinblau und Ruß. Die Pigmente können auch als vorgebildete Dispersionen in die organische Phase A) eingebracht werden.
Sehr beeindruckende Farbeffekte können durch Zusatz von, im Monomeren löslichen, Farbmitteln erzeugt werden. Die Mengen der zugesetzten löslichen Farbmittel bewegen sich von 0 bis 0,5 Gew.-% bezogen auf die Monomerphase.

### Die Herstellung der Gießharz-Suspensionen

Zweckmäßigerweise geht man bei der Herstellung der Gießharz-Suspensionen von der flüssigen Polymervorstufe A) aus, welche die Monomeren, die Praepolymerisate sowie gegebenenfalls die Organosiliciumkomponente C) enthält und welche die organische Phase bildet.
In der organischen Phase wird nun mit Hilfe mechanischer Dissolver der anorganische Füllstoff B) sowie die Pigmente bzw. Farbmittel PF verteilt.

Der Vorgang ist in der Regel nach 10 Minuten abgeschlossen. Danach wird die Suspension über einen Zeitraum von etwa 10 Minuten am Dissolver dispergiert, wobei die Umlaufgeschwindigkeit des Dissolvers etwa 10 bis 20 Meter pro Sekunde beträgt. Im allgemeinen werden die anorganischen Füllstoffe B) der organischen Phase A) solchermaßen zugegeben, daß die Viskosität nicht über einen Wert von etwa 10 Pa·s steigt.
Die gegebenenfalls eingesetzten Organosiliciumverbindungen C) werden der organischen Phase A) vor Zugabe der Füllstoffe zugegeben. Alternativ hierzu kann der Füllstoff B) vor Zugabe zur organischen Phase A) silanisiert werden, beispielsweise durch Trockensilanisierung. Zu der erhaltenen Suspension gibt man die vorgesehene Menge an Schichtsilikaten SSK, vorzugsweise unter Einwirkung eines Dissolvers bis zur gleichmäßigen Verteilung derselben. Anschließend löst man die Polymerisationshilfsmittel wie an sich bekannte Polymerisationsinitiatoren in Mengen von 0,1 bis 5 Gew.-% bezogen auf die Monomeren. Als Polymerisationsinitiatoren werden Radikalbildner eingesetzt, deren Zerfall in Radikale thermisch oder durch Redox-Prozesse induziert werden kann. Grundsätzlich sind alle diejenigen geeeignet, die bereits bei tiefen Temperaturen einen hohen Radikalstrom liefern (vgl. J. Brandrup, E.H. Immergut, "Polymer Handbook" 3rd. Ed., Kapitel III, Seiten 1 bis 65, J. Wiley, 1989). Genannt seien beispielsweise Peroxyester wie z.b. Bis-(4-tert.butylcyclohexyl)peroxydicarbonat. Zweckmäßigerweise erfolgt der Zusatz der Initiatoren erst kurz vor dem Verfüllen und Aushärten der Gießharz-Suspensionen. Gegebenenfalls ist es von Vorteil, wenn die Gießharz-Suspension innere und/oder äußere Tennmittel enthält, die das Anhaften des gehärteten Gießharzes an der Form verhindern und eine gute Oberflächenbeschaffenheit der Gießharz-Formteile bewirken. Beispiele für innere Trennmittel sind Alkali- und Erdalkalisalze von Fettsäuren und Alkylphosphate sowie deren neutralisierte Derivate. Zu geeigneten äußeren Formtrennmitteln gehören auf den Formen befindliche Überzüge, beispielsweise aus Polytetrafluorethylen, Polyorganosiloxan oder Polyvinylalkohol.

### Herstellung der Gießharz-Formkörper

Die mit dem Polymerisationsinitiator versetzte, erfindungsgemäße Gießharz-Suspension läßt sich beispielsweise sehr gut in die üblichen Gießformen vergießen. Vorteilhafterweise wird die Suspension vor dem Verfüllen evakuiert. Die Härtung (= Polymerisation der organischen Phase A) erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Mit Hilfe der erfindungsgemäßen Gießharz-Suspensionen lassen sich die vielfältigsten Formen füllen und eine technisch einwandfreie Polymerisation durchführen. Auf diese Weise können Platten, Schüsseln, Waschbecken, Spülbecken, WC-Becken, Formkörper für Bauindustrie, Maschinenfundamente, Behälter u.a. hergestellt werden. Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden.
Die Restmonomerengehalte der gehärteten Gießharze liegen unterhalb 1 Gew.-% bezogen auf den Gesamtmonomerenanteil, bevorzugt unter 0,5 Gew.-%.

### Vorteilhafte Wirkungen der Erfindung

Die erfindungsgemäßen Gießharz-Suspensionen genügen in hohem Maße den Anforderungen der Technik bezüglich Verarbeitbarkeit und Produktqualität der fertigen Formkörper. Insbesondere wird die gestellte Aufgabe, nämlich Formkörper mit granitimitierender Oberflächenbeschaffenheit herzustellen, in hervorragender Weise erfüllt. Der "Granit"-Effekt, der in der Regel auf die Unterseite der Formkörper begrenzt ist, wird offenbar durch die statistische Verteilung einer großen Zahl lichtreflektierender Partikel, die oberflächennah aber in ungleichmäßiger Lagerung fixiert sind, neben den ähnlich verteilten Pigmentpartikeln hervorgerufen. Die erfindungsgemäß hergestellten Formkörper erfüllen gleichfalls die Anforderungen an die mechanischen und die Gebrauchseigenschaften beispielsweise auf dem Sanitärgebiet, als Küchenspülen, Dekorplatten usw.

### BEISPIELE

### Beispiel 1:

### Herstellung des Gießharzes:

104 g Methylmethacrylat wird mit 2 g Ethylenglykoldimethacrylat und 8 g γ-Methacryloyloxypropyl-trimethoxysilan unter Zusatz von 0,2 g n-Butylamin homogen vermischt.
Zu diesem Gemisch werden 280 g Cristobalit (Cristobalit T 6000, Korngröße 0,1 - 10 µm, Produkt der Fa. Quarzwerke, Köln) portionsweise mit Hilfe eines Dissolvers (UMA-Dissolver, Fa. VMA Getzmann, Verfahrenstechnik Heienbach, 5225 Reichshof) so eingetragen, daß die Viskosität des Gemisches 10 Pa·s nicht übersteigt. Die Dauer des Eintragens liegt bei ca. 1 Stunde, wobei in Intervallen zwischendurch, speziell gegen Ende, die Reaktion ohne Rühren ablaufen gelassen wird.
Der Ansatz wird nun 24 Stunden auf der Rollbank behandelt, dann setzt man 6 g eines Copolymerisats aus Methylmethacrylat und Methylacrylat (90 : 10 Gew.-Teile) mit einem η_{spez/C}-Wert von 100 (Produkt PLEX® 8640 der Röhm GmbH) zu. Die Viskosität (nach DIN 53211, Becherdurchmesser 6 mm) beträgt 24 sec.
Zu 200 g einer solchen Suspension werden 10 g Decorpigment Silber 125 - 250 µm der Fa. Naintsch Mineralwerke Graz/Österreich, 1,2 g Bis-(4-tert.butyl-cyclohexyl)peroxydicarbonat zugegeben und mit einem Flügelrührer homogen verteilt bzw. gelöst. Danach werden die in der Suspension befindlichen Luftbläschen unter Anlegen eines Unterdruckes entfernt.

### Herstellung eines Gußstücks:

Man stellt aus zwei hochglanzpolierten, verchromten Messingplatten (als Anhalt 350 x 350 x 4 mm) und einer Dichtschnur, (beispielsweise PVC-Schnur mit 4 mm Durchmesser) eine Form-Kammer her, in welche man die hochgefüllte Suspension verfüllt. Nach dem Verschließen der Formkammer wird diese bei Raumtemperatur 20 Minuten waagerecht liegen gelassen und danach wird zunächst bei erhöhter Temperatur - beispielsweise bei ca. 65 Grad C und im Wasserbad bei waagerechter Lage der Formkammer - während eines Zeitraums von - als Anhalt - 20 Minuten und anschließend bei noch höherer Temperatur, beispielsweise bei 105 Grad C, vorzugsweise im Trockenschrank 14 Minuten lang getempert. Anschließend wird das Polymerisatformstück bei etwa 60 bis 70 Grad C aus der Form-Kammer herausgenommen.

### Beispiel 2

Herstellung des Gießharzes wie in Beispiel 1 angeführt, wobei anstelle von Decorpigment Silber das Decorpigment Gold 125 - 250 µm der Fa. Naintsch verwendet wurde. Die Herstellung des Gußstücks wurde wie in Beispiel 1 durchgeführt.

### Beispiel 3

Herstellung des Gießharzes wie in Beispiel 1 angeführt, wobei in der fertigen Suspension 0,01 Gew.-% Makrolexrot® GN, ein im Methylmethacrylat löslicher Farbstoff der Fa. Bayer, gelöst wird.

Die Herstellung des Gußstücks wurde wie in Beispiel 1 durchgeführt.

### Beispiel 4

Herstellung des Gießharzes wie in Beispiel 1 angeführt, wbei bei der Suspensionsherstellung 4 g Cristobalit durch 4 g TiO₂ RN 56, ein Weißpigment der Fa. Kronos, ersetzt wurde.
Die Herstellung des Gußstücks wurde wie in Beispiel 1 durchgeführt.

Aussehen der aus den Beispielen 1 - 4 erhaltenen Gußstücke:
(Beurteilung der bei der Härtung unten liegenden Seite der Platte)
- Beisp. 1 -: effektvoller silbrig glitzernder Graniteffekt
- Beisp. 2 -: effektvoller gelbgolden glitzernder Graniteffekt
- Beisp. 3 -: effektvoller rötlich glitzernder Graniteffekt
- Beisp. 4 -: effektvoller heller silbriger Graniteffekt

Die Graniteffekte stellen sich bei allen Beispielen sehr homogen dar.

## Patentansprüche

1. Verfahren zur Herstellung von gefüllten Kunststoff-Formkörpern aus Polyalkylmethacrylat-Basis mit Granit-Effekt in einer formgebenden Polymerisationskammer unter den Bedingungen der freiradikalischen Polymerisation,
dadurch gekennzeichnet,
daß man in einer Gießharz-Suspension bestehend aus
A) 20 - 80 Gew.-Teile einer flüssigen PMMA-Polymervorstufe
B) 0 - 75 Gew.-Teile eines nichtmetallisierten teilchenförmigen Füllstoffs
C) 0 - 5 Gew.-Teile bezogen auf die Summe von A) und B) einer polymerisierbaren Organosiliciumverbindung
D) 0 - 2 Gew.-Teile eines oder mehrerer Pigmente oder Farbmittel
metallfarbene, plättchenförmige Schichtsilikate SSK in Partikelform im Teilchengrößenbereich zwischen 20 und 500 µm in Anteilen von 1 bis 35 Gew.-Teilen bezogen auf die Summe von A) und B) verteilt, die freiradikalische Polymerisation bis zum Ende durchführt und abschließend Entformung vornimmt.

2. Verfahren gemäß Anspruch 1, dadurch gekennzeichnet, daß der nichtmetallisierte, teilchenförmige Füllstoff gemäß B) in Anteilen von 40 - 75 Gew.-Teilen eingesetzt wird.

3. Verfahren gemaß Anspruch 2, dadurch gekennzeichnet, daß der nichtmetallisierte teilchenförmige Füllstoff gemäß B) Cristobalit darstellt.

## Claims

1. A process for preparing filled, plastic, moulded articles based on polyalkylmethacrylate with granite effect, in a moulding polymerisation chamber, under free-radical polymerisation conditions, characterised in that metal-coloured, plate-like laminated silicates SSK in the form of particles within the particle size range of between 20 and 500 µm, in amounts of 1 to 35 parts by weight based on the sum of A) and B), are distributed in a cast resin suspension comprising
A) 20 to 80 parts by weight of a liquid PMMA polymer precursor
B) 0 to 75 parts by weight of a non-metallised, particle-like filler
C) 0 to 5 parts by weight based on the sum of A) and B) of a polymerisable organosilicon compound
D) 0 to 2 parts by weight of one or more pigments or dyestuffs,
the free-radical polymerisation is carried out to completion and the article is finally removed from the mould.

2. A process according to claim 1, characterised in that the non-metallised, particle-like filler according to B) is used in amounts of 40 to 75 parts by weight.

3. A process according to claim 2, characterised in that the non-metallised, particle-like filler according to B) is crystobalite.

## Revendications

1. Procédé de fabrication de corps moulés ayant un effet granité, en matière plastique à base de polyméthacrylate d'alkyle contenant une charge, dans une chambre de polymérisation et de moulage dans les conditions de la polymérisation radicalaire, caractérisé en ce que l'on répartit, dans une suspension ce résine coulée se composant de
A) 20 à 80 parties en poids d'un prépolymère de PMMA liquide,
B) 0 à 75 parties en poids d'une charge particulaire non métallisée,
C) 0 à 5 parties en poids, par rapport à la somme de A) et B), d'un composé organique du silicium polymérisable.
D) 0 à 2 parties en poids d'un ou de plusieurs pigments ou colorants,
des phyllosilicates en paillettes de couleur métal SSK, sous forme de particuies dans la plage granulométrique comprise entre 20 et 500 µm, dans des proportions de 1 à 35 parties en poids par rapport à la somme de A) et B), on mène à bonne fin la polymérisation radicalaire et on procède finalement au démoulage.

2. Procédé selon la revendication 1, caractérise en ce que la charge particulaire non métallisée B) est utilisée dans des proportions de 40 à 75 parties en poids.

3. Procédé selon la revendication 2, caractérisé en ce que la charge particulaire non métallisée B) est consituée par de la cristobalite.
